# EUROPEAN PATENT APPLICATION

(11) **EP 4 796 424 A1**
(43) Date of publication of application: **26.08.2026**
(21) Application number: 24879594.0
(22) Date of filing: 04.10.2024
(51) Int. Cl.: B62M 6/45, B62M 6/50

(54) **CONTROL DEVICE, ELECTRIC-ASSIST BICYCLE, AND ASSIST CONTROL METHOD**

(30) Priority: 18.10.2023 JP 2023179352
(71) Applicant: Minebea Mitsumi Inc., Kitasaku-gun, Nagano 3890293 (JP)
(72) Inventor: TAKADA, Kazuo, Kitasaku-gun, Nagano 389-0293 (JP); TOTSUKA, Shinji, Kitasaku-gun, Nagano 389-0293 (JP); KITANO, Takamichi, Kitasaku-gun, Nagano 389-0293 (JP); NAITO, Keita, Kitasaku-gun, Nagano 389-0293 (JP)
(74) Representative: Winter, Brandl - Partnerschaft mbB
(86) International application number: PCT/JP2024/035629
(87) International publication number: WO 2025/084169

(57) **Abstract**

To provide a control device capable of preventing, for example, unnecessary assist operation. For example, a control device (1) assists the rotation of a pedal (4) in a case where a ratio (R) of a rotation speed (Vb) of a wheel (2, 3) to a rotation speed (Vp) of the pedal (4) is within a predetermined range, and releases the assist of the rotation of the pedal (4) in a case where the ratio (R) is outside the predetermined range.

## Description

### Technical Field

The present invention relates to a control device, an electrically assisted bicycle, and an assist control method.

### Background Art

In a device such as an electrically assisted bicycle including a pedal and a wheel, a control device for controlling whether or not to assist rotation of the pedal is known. For example, Patent Document 1 discloses a drive unit that stops assist control based on an amplitude of torque while a crankshaft rotates in a predetermined rotation angle range.

### Citation List

### Patent Literature

Patent Literature 1: JP 2014-139067 A

### Summary of Invention

### Technical Problem

In a device such as an electrically assisted bicycle, it is sometimes desired to prevent the assist from operating in a situation such as in case of traveling downhill or coasting. An object of the present invention is to provide a control device capable of preventing an unnecessary assist operation.

### Solution to Problem

A control device according to an example of the present invention assists rotation of a pedal in a case where a ratio of a rotation speed of a wheel to a rotation speed of the pedal is within a predetermined range, and releases the assist of the rotation of the pedal in a case where the ratio is outside the predetermined range.

An assist control method according to another example of the present invention includes the steps of acquiring a rotation speed of a wheel, acquiring a rotation speed of a pedal, and determining whether or not an assist of a rotation of the pedal is necessary based on a ratio of the rotation speed of the wheel to the rotation speed of the pedal.

### Brief Description of Drawings

FIG. 1 is a side view of an electrically assisted bicycle including a control device according to an embodiment being an example of the present invention.
FIG. 2 is a block diagram schematically illustrating a configuration of a control device, a sensor, and a motor according to the embodiment being an example of the present invention.
FIG. 3 is a flowchart illustrating an example of the flow of control by the control device according to the embodiment being an example of the present invention.

### Description of Embodiments

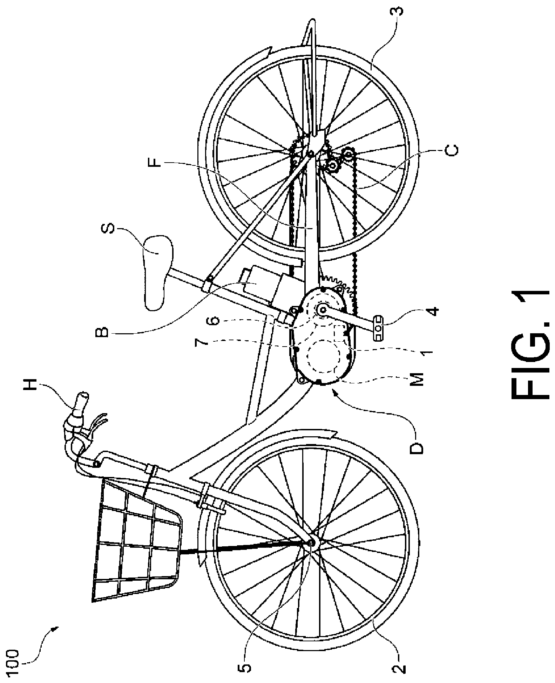

An embodiment being one example of the present invention will be described below with reference to the drawings. FIG. 1 is a side view of an electrically assisted bicycle 100 including a control device (motor control drive device) 1 according to the present embodiment.

As illustrated in FIG. 1, the electrically assisted bicycle 100 includes a frame F, a handle H, a saddle S, a transmission body C, a battery B, a drive unit D, a first wheel (front wheel) 2, a second wheel (rear wheel) 3, and a pedal 4. In a case where the rider sits at the saddle S of the electrically assisted bicycle 100 and rotates the pedal 4 by pedaling, the driving force is transmitted to a wheel (typically, the rear wheel 3) via the transmission body C while being assisted by the drive unit D as necessary, and the rider can travel forward. The transmission body C may be a chain or a belt.

A first sensor 5 for detecting a rotation speed Vb of the wheel is disposed, for example, in the vicinity of a rotation shaft of the front wheel 2 or the rear wheel 3. In the present description, "detecting the rotation speed Vb of the wheel" may mean that the first sensor 5 itself calculates the rotation speed Vb of the wheel, may mean that the first sensor 5 outputs a signal (output signal Sb) necessary for calculating the rotation speed Vb of the wheel to the control device 1 and the control device 1 calculates the rotation speed Vb of the wheel, or may mean that the first sensor 5 outputs a signal (output signal Sb) necessary for calculating the rotation speed Vb of the wheel to another arithmetic device (not illustrated) and the arithmetic device, upon receiving the output signal Sb, calculates the rotation speed Vb of the wheel and outputs the rotation speed Vb to the control device 1. FIG. 1 illustrates an example where the first sensor 5 is disposed at the front wheel 2. As the first sensor 5, a known sensor capable of detecting the rotation speed Vb of the wheel or capable of outputting a signal necessary for calculating the rotation speed Vb of the wheel can be used. The first sensor 5 may be, for example, a magnetic sensor or a Hall sensor capable of detecting the number of rotations or rotation angle of the wheel, or may be another sensor such as an optical sensor capable of detecting the number of rotations or rotation angle of the wheel. The first sensor 5 may be disposed at a position where the number of rotations or the rotation angle of the wheel can be detected, for example, at a position away from the rotation axis of the front wheel 2 or the rear wheel 3.

The drive unit D and the battery B are typically disposed around a crankshaft (not illustrated) connected to the pedal 4. The drive unit D includes the control device 1, a motor M, a speed reducer (not illustrated), a second sensor 6 for detecting a rotation speed Vp of the pedal 4, and a third sensor 7 as a torque sensor for detecting a pedaling force applied to the pedal 4. In FIG. 1, the control device 1, the motor M, the second sensor 6, and the third sensor 7 are indicated by hidden lines (broken lines). Note that a part or all of the control device 1 may be disposed outside the drive unit D. The battery B supplies power to the motor M and the control device 1, and the motor M and the control device 1 operate.

The motor M is controlled by the control device 1 and assists the rotation of the pedal 4 via the speed reducer. Note that, in this description, "rotation of the pedal 4" refers to rotation of the pedal 4 around the crankshaft. In the present description, "assisting the rotation of the pedal 4" includes reducing the force (pedaling force) required to rotate the pedal 4 to move the bicycle forward. The motor M may be a brushless DC motor including coils corresponding to three phases (U-phase, V-phase, and W-phase), for example. The motor M may include a sensor such as a Hall IC for detecting a rotation angle of the rotor.

The second sensor 6 is a sensor for detecting the rotation speed Vp of the pedal 4. In the present description, "detecting the rotation speed Vp of the pedal 4" may mean that the second sensor 6 itself calculates the rotation speed Vp of the pedal 4, may mean that the second sensor 6 outputs a signal (output signal Sp) necessary for calculating the rotation speed Vp of the pedal 4 to the control device 1 and the control device 1 calculates the rotation speed Vp of the pedal 4, or may mean that the second sensor 6 outputs a signal (output signal Sp) necessary for calculating the rotation speed Vp of the pedal 4 to another arithmetic device (not illustrated) and the arithmetic device, upon receiving the output signal Sp, calculates the rotation speed Vp of the pedal 4 and outputs the rotation speed Vp to the control device 1. The second sensor 6 may be, for example, a sensor generally called a cadence sensor. The second sensor 6 may be a known sensor capable of outputting a signal, and examples of the second sensor include a magnetic sensor, an optical sensor, and a mechanical sensor. Although FIG. 1 illustrates an example where the second sensor 6 is accommodated in the housing of the drive unit D, the second sensor 6 may be disposed outside the housing of the drive unit D. The second sensor 6 may be disposed at the pedal 4, a crank arm connecting the pedal 4 and the crankshaft, the crankshaft, or the frame F, or may be disposed at any location of another component of the bicycle.

The third sensor 7 is a torque sensor for detecting the pedaling force applied to the pedal 4. In the present description, "detecting the pedaling force applied to the pedal 4" may mean that the third sensor 7 itself calculates the pedaling force, may mean that the third sensor 7 outputs a signal St necessary for calculating the pedaling force to the control device 1 and the control device 1 calculates the pedaling force, or may mean that the third sensor 7 outputs the signal St necessary for calculating the pedaling force to another arithmetic device (not illustrated) and the arithmetic device, upon receiving the signal St, calculates the pedaling force and outputs the pedaling force to the control device 1. The third sensor 7 may be a known sensor capable of outputting a signal, and examples of the third sensor 7 include a magnetostrictive sensor and a mechanical sensor. The third sensor 7 may be disposed at the pedal 4, the crank arm connecting the pedal 4 and the crankshaft, the crankshaft, the housing of the drive unit D, or at any other location. The electrically assisted bicycle 100 can adjust the output of the motor M and the like in accordance with the pedaling force detected by the third sensor 7.

The control device 1 will be described in detail below. The control device 1 is configured to assist the rotation of the pedal 4 in a case where a ratio R of the rotation speed Vb of the wheel (the front wheel 2 in the example illustrated in FIG. 1) on the side where the first sensor 5 is disposed to the rotation speed Vp of the pedal 4 is within a predetermined range, and to release the assist of the rotation of the pedal 4 (not to assist the rotation of the pedal 4) in a case where the ratio R is outside the predetermined range. The control device 1 determines whether or not the ratio R is within a predetermined range based on the output signal Sb of the first sensor 5 and the output signal Sp of the second sensor 6.

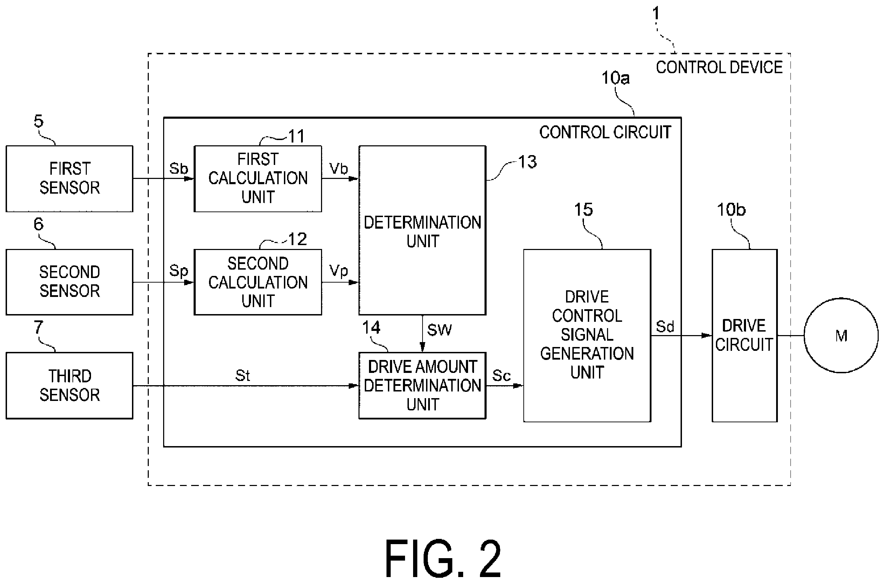

FIG. 2 is a block diagram schematically illustrating the configuration of the control device 1, the sensors (the first sensor 5, the second sensor 6, and the third sensor 7), and the motor M according to the present embodiment. The control device 1 includes a control circuit 10a and a drive circuit 10b, for example. The constituent elements of the control device 1 illustrated in FIG. 2 are part of the whole, and the control device 1 may include other constituent elements in addition to the constituent elements illustrated in FIG. 2.

The control circuit 10a is implemented by a program processing device (e.g., a microcontroller) having a configuration where, for example, a processor such as a CPU, various storage devices such as RAM and ROM, and peripheral circuits such as a counter (timer), an A/D conversion circuit, a D/A conversion circuit, a clock generation circuit, and an input/output I/F circuit are connected to one another via a bus or a dedicated line.

The control circuit 10a includes, for example, a first calculation unit (first arithmetic unit) 11, a second calculation unit (second arithmetic unit) 12, a determination unit 13, a drive amount determination unit 14, and a drive control signal generation unit 15 as functional blocks. The first calculation unit 11, the second calculation unit 12, the determination unit 13, the drive amount determination unit 14, and the drive control signal generation unit 15 are implemented in a case where the processor executes various types of arithmetic processing in accordance with the programs stored in a memory and controls the peripheral circuits such as the counter and the A/D conversion circuit in the program processing device as the control circuit 10a, for example. Note that the control circuit 10a may have other functions.

Signals output from the first sensor 5, the second sensor 6, and the third sensor 7 are input to the control circuit 10a. The first calculation unit 11 calculates the rotation speed Vb of the wheel based on the output signal Sb input from the first sensor 5. The second calculation unit 12 calculates the rotation speed Vp of the pedal 4 based on the output signal Sp input from the second sensor 6.

The determination unit 13 determines, based on the rotation speed Vb of the wheel calculated by the first calculation unit 11 and the rotation speed Vp of the pedal 4 calculated by the second calculation unit 12, whether or not the ratio R of Vb to Vp is within a predetermined range. Note that the determination unit 13 is not limited to calculating the ratio R in the form of a strict "ratio", that is, in the form of "A: B" or the like, or storing the ratio R in the storage device, and may indirectly determine whether or not the ratio R is within a predetermined range by, for example, a method described below.

Whether or not the ratio R is within the predetermined range may be determined by, for example, comparing the value of Vb with a value Vbv obtained by multiplying Vp by a predetermined value X. Here, the value X may be, for example, a value of Vb/Vp in a case where the pedal 4 is neither idling nor stationary (in a case where the rotation of the pedal 4 contributes to the rotation of the wheel). The value of Vb/Vp in a case where the pedal 4 is neither idling nor stationary can be calculated by, for example, a method described later. The value Vbv may be considered as a virtual rotation speed of the wheel based on the rotation speed Vp of the pedal 4 at a certain time point.

The determination unit 13 may determine that the ratio R is within the predetermined range in a case where the value Vbv is, for example, within a range of -20% to +20% of Vb, within a range of -15% to +15% of Vb, within a range of -5% to +5% of Vb, within a range of - 2% to +2% of Vb, or within a range of -1% to + 1% of Vb as a result of comparing the value of Vb with the value Vbv obtained by multiplying Vp by the predetermined value X.

The determination unit 13 may determine whether or not the ratio R is within the predetermined range based on whether the ratio R is substantially equal to the predetermined value. Whether or not the ratio R is substantially equal to the predetermined value may be determined, for example, based on whether or not the value of Vb and the value Vbv obtained by multiplying Vp by the value X are substantially equal to each other. In this case, "substantially equal" may mean that the value Vbv is more than -1% and less than +1% of Vb, for example. The value Vbv may be equal to Vb.

The determination unit 13 may determine whether or not the ratio R is within the predetermined range by another method. For example, the determination unit 13 may determine whether or not the ratio R is within the predetermined range by a method of comparing a value Xv obtained by dividing Vb by Vp (that is, Xv = Vb/Vp) with the predetermined value X. In this case, the determination unit 13 may determine that the ratio R is within the predetermined range in a case where the value Xv is within a range of -20% to +20% of the value X, within a range of -15% to +15% of the value X, within a range of -5% to +5% of the value X, within a range of - 2% to +2% of the value X, or within a range of -1% to +1% of the value X. The determination unit 13 may determine whether or not the ratio R is substantially equal to the predetermined value, for example, based on whether or not the value Xv and the value X are substantially equal to each other. In this case, for example, the value Xv may be more than -1% and less than +1% of the value X. The value Xv may be equal to the value X.

In a case where the ratio R is within the predetermined range, the determination unit 13 sets "1" to an assist on/off bit (SW) in the data register (SW = 1), for example. This state is also referred to as assist setting register ON (1). In a case where the ratio R is out of the predetermined range, the determination unit 13 resets the assist on/off bit (SW) in the data register (SW = 0), for example. This state is also referred to as assist setting register OFF (0).

The drive amount determination unit 14 calculates and determines a drive amount necessary for the assist based on the signal St from the third sensor 7 being a torque sensor. In a case where the value of SW is 1 and the drive amount calculated based on the signal St is more than 0 (in a case where it is determined that assist is necessary based on the third sensor 7), the drive amount determination unit 14 outputs the drive command signal Sc indicating the target state of the operation of the motor M.

The drive control signal generation unit 15 generates a drive control signal Sd for driving the motor M based on the drive command signal Sc, and controls the drive of the motor M. The drive control signal generation unit 15 may monitor the rotation state of the motor M by obtaining information such as the rotation angle and the rotation speed of the motor M based on the signals from the sensors such as a hall IC provided at the motor M, for example, and may also generate the drive control signal Sd to cause the motor M to be in a predetermined operation state and provide the drive control signal Sd to the drive circuit 10b. The drive control signal Sd is, for example, a pulse width modulation (PWM) signal.

The drive circuit 10b drives the motor M by exciting the coils corresponding to three phases (U-phase, V-phase, and W-phase) of the motor M based on the drive control signal Sd. The drive circuit 10b may include, for example, an inverter circuit for driving each coil, a pre-drive circuit for driving the inverter circuit in accordance with the drive control signal Sd, a current detection circuit for detecting a current flowing through the respective coils, and the like.

The control device 1 may be configured such that a part or all of the control circuit 10a and a part or all of the drive circuit 10b are packaged as a single integrated circuit device (IC), or may be configured such that each of the control circuit 10a and the drive circuit 10b is packaged as a separate integrated circuit device.

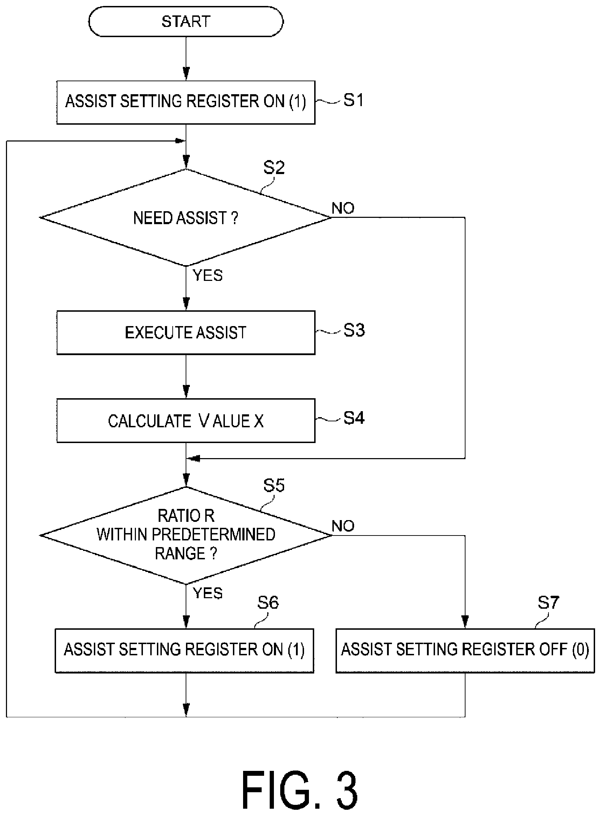

Next, a flow of the assist control of the rotation of the pedal 4 by the control device 1 according to the present embodiment will be described. FIG. 3 is a flowchart illustrating one example of the flow of control by the control device 1. However, the control method by the control device 1 is not necessarily limited to the following description and the control method illustrated in FIG. 3.

First, the control device 1 sets "1" to the assist on/off bit (SW) in data register (assist setting register ON (1)) (step S1). Next, the control device 1 determines whether or not the assist of the rotation of the pedal 4 is necessary (step S2). To be specific, in a case where the value of SW is 1 and the drive amount calculated based on the signal St is more than 0, the process proceeds to step S3, and otherwise, the process proceeds to step S5.

In a case where it is determined that the assist of the rotation of the pedal 4 is necessary, the control device 1 drives the motor M and executes the assist of the rotation of the pedal 4 (step S3). Immediately after the motor M starts assisting the rotation of the pedal 4, the control device 1 acquires the rotation speed Vb of the wheel and the rotation speed Vp of the pedal, and calculates the predetermined value X as X = Vb/Vp (step S4). Here, "immediately after the motor M starts assisting the rotation of the pedal 4" may be, for example, within one rotation, within 3/4 rotation, within 2/4 rotation, or within 1/4 rotation of the pedal 4 (within 360 degrees, within 270 degrees, within 180 degrees, or within 90 degrees of the rotation angle of the pedal) after the motor M starts assisting the rotation of the pedal 4, or may be within 5 seconds, within 3 seconds, within 1 second, within 0.5 seconds, or within 0.1 seconds after the motor M starts assisting the rotation of the pedal 4. It is considered that the pedal 4 is neither idling nor stationary (the rotation of the pedal 4 contributes to the rotation of the wheel) immediately after the motor M starts assisting the rotation of the pedal 4. Therefore, the value X can be considered as the value of Vb/Vp in a case where the pedal 4 is neither idling nor stationary.

In step S5, the necessity of the assist of the rotation of the pedal 4 is determined based on the ratio R of Vb to Vp. That is, in case of determining whether or not the ratio R is within a predetermined range determined based on the value X, if the ratio R is within the predetermined range, "1" is set to the assist on/off bit (SW) in the data register (assist setting register ON (1)) (step S6), and if the ratio R is outside the predetermined range, the assist on/off bit (SW) in the data register is reset (assist setting register OFF (0)) (step S7). Thereafter, the process returns to step S2, and step S2 to step S6 (or step S7) are repeated.

Here, as described above, the value X is calculated as the value of Vb/Vp in a case where the pedal 4 is neither idling nor stationary. Therefore, in a case where the ratio R is outside the predetermined range determined based on the value X, it can be determined that the rotation of the pedal 4 does not contribute to the rotation of the wheel and the assist of the rotation of the pedal 4 is unnecessary. Therefore, according to the flow of the control described above, the assist is executed in a case where the assist of the rotation of the pedal 4 is necessary, and the assist is released in a case where the assist of the rotation of the pedal 4 is unnecessary. In this manner, the control device 1 according to the present embodiment can prevent the operation of unnecessary assist.

Although the control device and the assist control method according to the present invention have been described above with reference to the preferred embodiment, the control device and the assist control method according to the present invention are not limited to any configurations of the embodiment described above.

In the control device and the assist control method according to the present invention, the predetermined range of the ratio of the rotation speed of the wheel to the rotation speed of the pedal may change depending on the situation. According to the control device and the assist control method of the present invention, it may be determined whether or not the ratio of the rotation speed of the wheel to the rotation speed of the pedal is within the predetermined range based on a value set at the time of manufacture or the like instead of the value X. According to the control device and the assist control method of the present invention, it may be determined whether or not the ratio of the rotation speed of the wheel to the rotation speed of the pedal is within the predetermined range based on a value freely set by the user.

In addition, the control device and the assist control method according to the present invention can be appropriately modified and the shapes, the dimensions, and the combinations of the various configurations can be modified, by a person skilled in the art according to previously known knowledge. Such modifications are of course included in the scope of the present invention as long as these modifications still include the configurations of the present invention.

### Reference Signs List

1. control device, 2, 3. wheel, 4. pedal, 5. first sensor, 6. second sensor, 7. third sensor, 100. electrically assisted bicycle, R. ratio, M. motor.

## Claims

1. A control device configured to:
assist a rotation of a pedal in a case where a ratio of a rotation speed of a wheel to a rotation speed of the pedal is within a predetermined range; and
release the assist of the rotation of the pedal in a case where the ratio is outside the predetermined range.

2. The control device according to claim 1, wherein the ratio is substantially equal to a predetermined value in a case where the ratio is within the predetermined range.

3. An electrically assisted bicycle comprising:
a wheel;
a pedal;
a first sensor configured to detect a rotation speed of the wheel;
a second sensor configured to detect a rotation speed of the pedal;
a motor configured to assist a rotation of the pedal; and
the control device according to claim 1 or 2, the control device being configured to control the motor.

4. The electrically assisted bicycle according to claim 3, wherein the control device is configured to determine whether or not the ratio is within the predetermined range based on an output signal of the first sensor and an output signal of the second sensor.

5. The electrically assisted bicycle according to claim 3 or 4, wherein the control device determines the predetermined range based on a value obtained from the rotation speed of the wheel and the rotation speed of the pedal immediately after the motor starts assisting the rotation of the pedal.

6. An assist control method comprising:
acquiring a rotation speed of a wheel;
acquiring a rotation speed of a pedal;
determining whether or not an assist of a rotation of the pedal is necessary based on a ratio of the rotation speed of the wheel to the rotation speed of the pedal.
